# EUROPÄISCHE PATENTANMELDUNG

(11) **EP 2 518 396 A2**
(43) Veröffentlichungstag der Anmeldung: **31.10.2012**
(21) Anmeldenummer: 12165681.3
(22) Anmeldetag: 26.04.2012
(51) Int. Cl.: F21V 7/22, F21V 7/04, F21V 8/00, F21Y 101/02, F21Y 113/00, F21S 8/02, F21S 8/06

(54) **Anordnung zur Lichtabgabe**

(30) Priorität: 28.04.2011 DE 102011017725
(71) Anmelder: Zumtobel Lighting GmbH, 6850 Dornbirn (AT)
(72) Erfinder: Braun, Pirmin, 6850 Dornbirn (AT)
(74) Vertreter: Thun, Clemens

(57) **Zusammenfassung**

Die vorliegende Erfindung betrifft eine Anordnung zur Lichtabgabe mit LED-Leuchtmitteln (200) zur Abgabe von Licht, und einem länglichen Lichtabgabeelement (100), wobei das Lichtabgabeelement (100) an einer Schmalseite einen Lichteintrittsbereich zum Eintritt des Lichts der LED-Leuchtmittel (200), bevorzugt einer Vielzahl von LEDs, in das Lichtabgabeelement (100) aufweist und einen Lichtaustrittsbereich zur Abstrahlung des Lichts der LED-Leuchtmittel (200), der sich über eine dem Lichteintrittsbereich gegenüberliegende Seite des Lichtabgabeelements erstreckt.

## Beschreibung

Die vorliegende Erfindung betrifft eine Anordnung zur Lichtabgabe mit LED-Leuchtmitteln und einem länglichen Lichtabstrahlelement.

Aufgrund der zunehmenden Leistungsfähigkeit von LED-Lichtquellen erschließt sich eine wachsende Anzahl von Anwendungsgebieten. Insbesondere im Bereich der Außen- und Innenbeleuchtung erweist sich die Verwendung von LED-Lichtquellen als vorteilhaft, wobei beispielsweise ein geringer Stromverbrauch und eine hohe Zuverlässigkeit sowie variable Einsatzmöglichkeiten der LED-Lichtquellen im Mittelpunkt stehen. Um diese Vorteile effizient verwirklichen zu können, weicht die Gestaltung entsprechender Leuchten jedoch häufig von der Form von Leuchten für konventionelle Lichtquellen ab; auch eine Neukonstruktion ist in vielen Fällen unvermeidlich.

Soll ein einheitliches Erscheinungsbild, beispielsweise bei der Gestaltung von Repräsentationsräumen, gewahrt werden, kommt häufig der Wunsch auf, die Gestaltung etablierter Leuchten beizubehalten bzw. aufzugreifen. Im Falle von Halogenlampen, die insbesondere eine beschränkte räumliche Ausdehnung aufweisen können, erweist sich besonders schwierig, entsprechende Leuchten anzupassen, da sich die Betriebsbedingungen sowie auch die Lichtabgabe - insbesondere die Lichtstärke - von LED-Lichtquellen signifikant von Halogenlampen unterscheiden.

Aufgabe der vorliegenden Erfindung ist daher, eine entsprechende Anordnung zur Lichtabgabe zu schaffen, die ermöglicht, die Form bzw. das Erscheinungsbild und bevorzugt auch die Lichtabstrahlcharakteristik einer Leuchte mit Halogenlampen weiterzuführen bzw. in einer Neukonstruktion aufzugreifen.

Diese Aufgabe wird mit Anordnungen zur Lichtabgabe gemäß den unabhängigen Ansprüchen 1 und 7 gelöst. Weiterbildungen sind Gegenstand der abhängigen Ansprüche.

Erfindungsgemäß ist eine Anordnung zur Lichtabgabe mit LED-Leuchtmitteln zur Abgabe von Licht und einem länglichen Lichtabgabeelement vorgesehen. Dabei weist das - bevorzugt den LED-Leuchtmitteln im Lichtweg nachfolgend, insbesondere unmittelbar nachfolgend - angeordnete längliche Lichtabgabeelement an einer Schmalseite einen Lichteintrittsbereich zum Eintritt des Lichts der LED-Leuchtmittel in das Lichtabgabeelement sowie einen Lichtaustrittsbereich zur Abstrahlung des Lichts der LED-Leuchtmittel auf. Der Lichtaustrittsbereich des länglichen Lichtabgabeelements erstreckt sich dabei auf eine dem Lichteintrittsbereich gegenüberliegende Seite des Lichtabgabeelements. Darüber hinaus ist ebenfalls vorgesehen, dass der Lichtaustrittsbereich sich auch auf Bereiche quer zur Längsausdehnung des Lichtabgabeelements erstreckt, sodass eine Lichtabstrahlung des Lichtabgabeelements in einen Raumwinkel von 180 Grad oder mehr erreicht wird, welcher der Lichtabstrahlcharakteristik einer einseitig gesockelten Halogenlampe entspricht.

Mit Hilfe dieser Anordnung zur Lichtabgabe kann demgemäß auf einfache Weise die Form einer Halogenlampe nachempfunden werden. Insbesondere besteht die Möglichkeit der Zuordnung mehrerer LEDs zu einem gemeinsamen Lichtabgabeelement, sodass die LED-Leuchtmittel beispielsweise durch ein LED-Cluster oder auch eine Reihe von LEDs gebildet sein könnten.

Bevorzugt ist das Lichtabgabeelement, insbesondere dessen Lichtaustrittsbereich dazu ausgebildet, die Form einer Halogenleuchte, insbesondere deren räumliche Ausdehnung, nachzuahmen und beispielsweise darüberhinaus auch die Lichtabstrahlcharakteristik der LED-Leuchtmittel zur Lichtabstrahlcharakteristik einer Halogenlampe umzuformen.

Die längliche beispielweise auch zapfenförmige Form des Lichtabgabeelements spiegelt diesen Erfindungsgedanken wieder; bevorzugt schließt eine den Lichteintrittsbereich bildende Fläche bzw. die Schmalseite die Richtung der Längsausdehnung des Lichtabgabeelements aus; beispielsweise ist der Lichteintrittsbereich quer zur Längsausdehnung des Lichtabgabeelements orientiert.

In einer Weiterbildung weist der Lichteintrittsbereich eine geringere Flächenausdehnung als der Lichtaustrittsbereich auf, und beispielsweise kann vorgesehen sein, dass der Lichteintrittsbereich eine größere Flächenausdehnung als der dem Lichteintrittsbereich gegenüberliegende Abschnitt bzw. Bereich des Lichtaustrittsbereichs aufweist. Das Lichtabgabeelement ist somit bevorzugt dazu ausgebildet, das Licht von beispielsweise mehreren LEDs, welche in Kombination die Flächenausdehnung einer Halogenlampe bzw. eines entsprechenden Sockels für eine Halogenlampe übertreffen würden, so zu bündeln, dass deren Licht über eine Lichtabgabefläche bzw. einen Lichtaustrittsbereich abgestrahlt werden kann, deren Fläche die Ausdehnung einer Halogenlampe annähernd erreicht.

Beispielsweise könnte sich die Form an Halogenlampen der einseitig gesockelten Typen mit den Sockeln G4, GU4, GY4, GZ4, G5, G5.3, G5.3-4.8, GU5.3, GX5.3, GY5.3, G6.35, GX6.35,GY6.35, GZ6.35,G8.5, G9, GU10, GZ10 oder auch Schraubsockeln wie beispielsweise E27 orientieren, sodass die Form des Lichtaustrittsbereichs die Form des Glaskörpers der genannten Lampentypen aufweist, und der Lichtaustrittsbereich beispielsweise durch einen Zylinder mit einem Durchmesser zwischen 4 und 40mm und einer Länge von 8 bis 80mm eingeschlossen werden kann, sodass mit dieser Bauform der Platzbedarf von LED-Leuchtmitteln, insbesondere in Form von Hochleistungs-LEDs, ein optimales Verhältnis zur Größe der Lichtabstrahlfläche bzw. des Lichtaustrittsbereichs aufweist.

Die Erfindung kann so mit Hilfe der Anordnung zur Lichtabgabe beispielsweise eine modulartige Integration von LED-Leuchtmitteln ermöglichen, die eine Halogenlampe insbesondere in einer einseitig gesockelten Form ersetzt.

Besonders vorteilhaft weist der Lichtaustrittsbereich die Form eines Zylinders, Kegels, Kegelstumpfs bzw. eines länglichen Elements mit polygoner Basisfläche, das sich beispielsweise mit der Entfernung von den LED-Leuchtmitteln verjüngt, oder einer beliebigen Kombination der Formen auf. Insbesondere ist eine längliche Bauform des Lichtaustrittsbereichs vorgesehen, um das Erscheinungsbild einer Halogenlampe aufzugreifen, bevorzugt handelt es sich dabei also um längliche Zylinder, Kegel bzw. Kegelstümpfe.

Eine Weiterbildung der Erfindung sieht ein besonders an das Erscheinungsbild einer Halogenlampe angepasstes Lichtabgabeelement vor, mit einem Lichtaustrittsbereich, der einen ersten im Wesentlichen zylinderförmigen Abschnitt aufweist, wobei sich auf der Deckfläche des Zylinders ein kegelförmiger bzw. kegelstumpfförmiger zweiter Abschnitt anschießt. Im Wesentlichen bedeutet in diesem Fall, dass der Übergang zur Deckfläche des Zylinders gerundet sein kann, oder der Querschnitt der Mantelfläche mit der Entfernung von den LED-Leuchtmitteln eine Verjüngung aufweist.

Besonders vorteilhaft sind die LED-Leuchtmittel beabstandet von dem Lichtabgabeelement, insbesondere von dessen Lichteintrittsbereich, angeordnet, sodass eine einfache Zugänglichkeit zu den Leuchtmitteln erreicht werden kann. Dies schließt jedoch nicht aus, dass die Anordnung zur Lichtabgabe, die modulartige Integration fördernd, eine zusammenhängende Baugruppe bildet.

In einer Weiterbildung der vorliegenden Erfindung umfasst die Anordnung einen im Lichtweg dem Lichtabgabeelement nachfolgenden Reflektor zur Abstrahlung des von den LED-Leuchtmitteln abgestrahlten Lichts.

Insbesondere im Bereich der Hochvolt-Halogenlampen, werden Halogenlampen als Baueinheit in Kombination mit Reflektoren hergestellt, sodass dies beispielsweise auch für die Anordnung zur Lichtabgabe realisiert sein kann oder besonders bevorzugt die Kombination aus Reflektor und Lichtabgabeelement eine Baueinheit bildet. Beispielsweise könnte diese Kombination auch einstückig ausgeführt sein, d.h. der Reflektor weist in diesem Fall ein zu dem Lichtabgabeelement identisches Material auf; er kann wie beispielsweise auch das Lichtabgabeelement insbesondere transparent oder wenigstens teiltransparent ausgeführt sein. Die Bauform der Reflektoren könnte beispielsweise den Typen R8, R11 oder R16 bzw. deren MR Ausführungen nachempfunden sein, also auch facettierte Reflektoren betreffen.

Bevorzugt weist der Lichtaustrittsbereich erste und zweite Teilbereiche auf, wobei ein erster Teil des Lichts der LED-Leuchtmittel in dem ersten Teilbereich so abgegeben wird, dass der erste Teil des Lichts von dem Reflektor reflektierend abgestrahlt werden kann bzw. wird. Beispielsweise kann dieser erste Teilbereich des Lichtaustrittsbereichs als Diffusor ausgebildet sein und eine entsprechende Strukturierung der Oberfläche aufweisen, insbesondere eine milchglasartige Struktur mit einer Vielzahl von unregelmäßig angeordneten Vertiefungen und Erhöhungen.

Insbesondere fördert dies die Nachbildung einer Lichtabstrahlcharakteristik einer Halogenlampe, da so die auf ein enges Strahlenbündel begrenzte Einstrahlung des Lichts der LED-Leuchtmittel zur Abstrahlung in einem großen Winkelbereich aufgeweitet werden kann. Darüber hinaus kann das Lichtabgabeelement bzw. der Lichtaustrittsbereich einen zweiten Teilbereich aufweisen, der dazu ausgebildet ist, einen zweiten Teil des Lichts der LED-Leuchtmittel abzustrahlen. Bevorzugt unterscheidet sich in diesem Fall die Lichtabstrahlungscharakteristik von der Lichtabstrahlung des ersten Teilbereichs. Beispielsweise könnte eine gerichtete Lichtabstrahlung für den zweiten Teilbereich vorgesehen sein, und so bevorzugt die Illumination eines zu einer Reflexionsfläche des Reflektors unterschiedlichen Bereichs realisiert werden.

Eine Weiterbildung des Erfindungsgedankens sieht beispielsweise vor, dass der Reflektor ein Lichtleiter ist, der dazu ausgebildet ist, das Licht der LED-Leuchtmittel zu leiten und im Bereich einer Lichtabgabefläche aus dem Reflektor auszukoppeln. Die Einkoppelung des Lichts der LED-Leuchtmittel könnte beispielsweise mit Hilfe einer Lichtabgabe über den zweiten Teilbereich des Lichtaustrittsbereichs des Lichtabgabeelements erfolgen. Im Lichtabgabeelement und dem Reflektor könnten beispielsweise korrespondierende Flächen vorgesehen sein, die eine reflexionsfreie Einkopplung des Lichts der LED-Leuchtmittel in den Reflektor ermöglichen.

Ein weiterer Aspekt der Erfindung betrifft eine Anordnung zur Lichtabgabe mit LED-Leuchtmitteln, einem Reflektor und einem Lichtabgabeelement. Der Reflektor ist in diesem Fall kuppelförmig ausgebildet und weist eine Lichtaustrittsöffnung sowie eine Durchführungsöffnung für das Lichtabgabeelement auf.

Eine kuppelförmige Ausbildung umfasst in diesem Fall beispielsweise auch einen wenigstens abschnittsweise parabolischen, elliptischen bzw. kugelförmigen, pyramidenförmigen Reflektor auch mit polygoner Grundform mit einer Lichtaustrittsöffnung.

Im Gegensatz zur üblichen Gestaltung einer Halogenlampe mit zugeordnetem Reflektor können die Leuchtmittel außerhalb eines Lichtabstrahlbereichs des Reflektors angeordnet sein.

Dies ermöglicht eine Reihe von Vorteilen; zunächst kann eine Vielzahl von LED-Leuchtmitteln zur gemeinsamen Lichtabgabe vorgesehen sein, die, auf einer gemeinsamen Montagefläche angeordnet, den Platzbedarf eines Sockels für die oben bezeichneten Halogenlampen überschreiten würden. Dadurch, dass diese Montagefläche außerhalb des Lichtabstrahlbereichs des Reflektors angeordnet werden kann, wird somit dessen Lichtabstrahlung kaum durch die Anzahl der LED-Leuchtmittel beeinflusst. Das Lichtabgabeelement kann in diesem Fall so gestaltet sein, dass es in dem Bereich, der in einen durch die Umfangsfläche des Reflektors und die Lichtaustrittsöffnung begrenzten Innenraum des Reflektors ragt, die eine zur Nachbildung einer Halogenlampe geeignete zapfenförmige, längliche Form aufweist.

Ein im entsprechenden Außenraum des Reflektors angeordneter Abschnitt des Lichtabgabeelements kann beispielsweise zur optimierten Leitung des Lichts der LED-Leuchtmittel in den Innenraum des Reflektors ausgebildet sein, bzw. insbesondere das Lichtabgabeelement kann zur Lichtleitung ausgebildet sein. Beispielsweise könnten entsprechende Abschnitte des Lichtabgabeelements dazu ausgebildet sein, das Licht der LED-Leuchtmittel zur Durchführungsöffnung zu lenken. Bevorzugt kann dies mit Hilfe von Totalreflektion am optisch dünneren Medium erfolgen oder das Lichtabgabeelement weist entsprechend verspiegelte Abschnitte auf, die das Licht der LED-Leuchtmittel zur Durchführungsöffnung lenken.

Bevorzugt kann der außerhalb des Innenraums angeordnete Abschnitt des Lichtabgabeelements die Lichtabstrahlung der LED-Leuchtmittel in das Lichtabgabeelement unterstützen, wobei der Lichteintrittsbereich entsprechende Mittel zur Strahlumformung aufweist, beispielsweise kann neben einer ebenen Ausgestaltung des Lichteintrittsbereichs bevorzugt auch eine konische bzw. eine kegelstumpfförmige Form vorgesehen sein. Auch kann im Bereich des außerhalb des Innenraums angeordneten Abschnitts des Lichtabgabeelements eine von der länglichen Form des Lichtabgabeelements abweichende Grundform aufweisen.

Um eine einfache Konstruktion der Anordnung zur Lichtabgabe zu ermöglichen, die gleichzeitig eine festgelegte räumliche Zuordnung des Lichtabgabeelements gegenüber dem Reflektor realisiert und eine modulartige Integration der Anordnung zur Lichtabgabe fördert, weist das Lichtabgabeelement bevorzugt Befestigungsmittel zur Verbindung des Lichtabgabeelements mit dem Reflektor auf. Insbesondere können die Befestigungsmittel so ausgestaltet sein, dass diese das Durchführungsloch zur Montage des Lichtabgabeelements in Kombination mit dem Lichtabgabeelement vollständig verschließen.

In gleicher Weise kann vorgesehen sein, dass das Lichtabgabeelement Befestigungsmittel zur Verbindung des Lichtabgabeelements mit den LED-Leuchtmitteln aufweist. Bevorzugt sind die Befestigungsmittel so ausgestaltet, dass die LED-Leuchtmittel beabstandet von dem Lichteintrittsbereich des Lichtabgabeelements angeordnet sind, und die Verbindung reversibel lösbar ist.

Somit ergibt sich neben einer entsprechend einer modularen Bauweise festgelegten Lage des Lichtabgabeelements gegenüber dem Reflektor bzw. den LED-Leuchtmitteln auch die Möglichkeit, dass der Reflektor und das Lichtabgabeelement bevorzugt in Kombination eine Schutzvorrichtung für die LED-Leuchtmittel darstellen, und diese insbesondere gegenüber dem Lichtabstrahlbereich des Reflektors abschirmen. Die Befestigungsmittel ermöglichen dabei bevorzugt eine reversibel lösbare Verbindung, beispielsweise auch durch Verrastung, sodass eine besonders einfache Zugänglichkeit zu den LED-Leuchtmitteln sichergestellt werden kann.

Über die Möglichkeit hinaus, das Durchführungsloch mit Hilfe von Befestigungsmitteln in Kombination mit dem Lichtabgabeelement zu verschließen, können die erwähnten Vorzüge auch dadurch erreicht werden, dass das Lichtabgabeelement ein Durchführungsloch des Reflektors vollständig verschließt. Beispielsweise könnte das Lichtabgabeelement dazu Vorsprünge aufweisen, die einen überlappenden Bereich des Reflektors und des Lichtabgabeelements bedingen, sodass das Lichtabgabeelement lediglich auf dem Reflektor aufliegt bzw. auch umgekehrt der Reflektor auf dem Lichtabgabeelement aufliegen kann.

Eine Weiterbildung der Erfindung sieht vor, dass der Reflektor wie beispielsweise auch das Lichtabgabeelement wenigstens Teilbereiche aus einem für spektrale Anteile des Lichts der LED-Leuchtmittel transparenten Material aufweist. Beispielsweise kann der Reflektor aus einem oder mehreren transparenten Kunststoffen wie z.B. PMP, PSU, PEI, PMMA oder auch wenigstens teilweise aus Glas bestehen.

Somit lässt sich der Lichtabstrahlbereich des Reflektors erweitern, insbesondere lassen sich mit Hilfe der Dicke des Reflektormaterials Lichtleitungseigenschaften des Reflektors variieren.

Darüber hinaus kann auch die Ausbildung des Reflektors mit schlagfesten Materialien vorgesehen sein, beispielsweise einem Kunststoff, der wie beschrieben auch transparent sein kann. Um den Schutzgedanken weiterhin zu fördern kann dies auch für das Lichtabgabeelement vorgesehen sein.

Gemäß einer Weiterbildung des Erfindungsgedankens weist der Reflektor Teilbereiche auf, die für spektrale Anteile des Lichts der LED-Leuchtmittel reflektierend ausgebildet sind. Beispielsweise könnte der Reflektor eine reflektierende Beschichtung aufweisen, die bevorzugt auch zur beschleunigten Wärmeableitung der LED-Leuchtmittel dienen kann, wenn sie beispielsweise aus Metall besteht.

Neben Teilbereichen kann dies auch für den gesamten Reflektor vorgesehen sein. Ebenso ist denkbar, dass der Reflektor in seiner Gesamtheit aus einem reflektierenden, insbesondere hochglänzenden Metall gefertigt ist, beispielsweise aus Aluminium, sodass auch damit neben hervorragenden Reflexionseigenschaften der Aspekt der Kühlung der Leuchtmittel verbessert werden kann.

Besonders bevorzugt ist zur Realisierung einer leistungsfähigen Kühlung der LED-Leuchtmittel vorgesehen, dass die Anordnung zur Lichtabgabe einen Kühlkörper aufweist, der mit den LED- Leuchtmitteln zumindest mittelbar zur Wärmeabfuhr verbunden ist.

Die Notwendigkeit eines Kühlkörpers kann jedoch eine relativ gravierende Abweichung gegenüber der Form einer konventionellen Halogenlampe bedeuten. Deshalb ist die kompakte Integration in die Anordnung zur Lichtabgabe besonders dienlich, um eine Halogenlampe in ihrer Verwendung ersetzen zu können. Dies könnte insbesondere dadurch realisiert werden, dass mit dem Kühlkörper verbundene Anschlussmittel zum elektrischen Anschluss der LED-Leuchtmittel vorgesehen sind.

Deshalb weist der Kühlkörper bevorzugt Anschlussmittel zum elektrischen Anschluss der LED-Leuchtmittel auf. Beispielsweise könnte der elektrische Anschluss der LED-Leuchtmittel so ausgebildet sein, dass der Kühlkörper eine Führung für die Anschlussmittel der LED-Leuchtmittel bildet. Insbesondere könnten so unabhängige Wege zur Wärmeleitung bzw. Wärmeabfuhr der LED-Leuchtmittel, beispielsweise über Anschlussleitungen gebildet sein, die eine optimierte Kühlung der LED-Leuchtmittel fördern.

Der Kühlkörper kann beispielsweise direkt mit den LED-Leuchtmitteln verbunden sein und ein Trägerelement für diese darstellen. In gleicher Weise ist zur optimalen Wärmeabfuhr denkbar, dass der Kühlkörper mit einem zur Wärmeabfuhr ausgebildeten Trägerelement der LED-Leuchtmittel wärmeleitend verbunden ist, bevorzugt direkt, oder auch mittelbar, beispielsweise über eine Heatpipe oder eine Vielzahl von weiteren wärmetransportfähigen Medien. So kann beispielsweise eine geeignete Einbauposition des Kühlkörpers ausgewählt werden, die dem Erscheinungsbild und der Lichtabgabe einer Halogenlampe förderlich ist.

Eine Weiterbildung der Erfindung kann vorsehen, dass die LED-Leuchtmittel eine Vielzahl von LEDs umfassen, wobei wenigstens zwei LEDs der Vielzahl von LEDs ein zueinander unterschiedliches Licht abgeben, welches sich insbesondere in der Farbe, Farbtemperatur oder auch der Intensität unterscheiden kann. Bevorzugt ist vorgesehen, dass das Lichtabgabeelement zwingend für alle Lichtbündel der LED-Leuchtmittel im Lichtweg für durch die Anordnung zur Lichtabgabe abgestrahltes Licht enthalten ist. Darüber hinaus ist beispielsweise auch denkbar, dass sekundäre Lichtbündel von den LED-Leuchtmitteln abgestrahlt werden, die sich beispielsweise in der Farbe bzw. Farbtemperatur gegenüber dem durch das Lichtabgabeelement abgestrahlten Licht unterscheiden können. Diese sekundären Lichtbündel könnten beispielsweise zur direkten Beleuchtung des Reflektors vorgesehen sein.

Darüber hinaus ist denkbar, dass die Farbe bzw. Farbtemperatur oder auch die Intensität des durch die LED-Leuchtmittel abgestrahlten Lichts steuerbar bzw. regelbar ist. Insbesondere kann dies für mehrere Teillichtbündel bzw. o.g. Parameter der Lichtabgabe unabhängig vorgesehen sein. Die Anordnung zur Lichtabgabe kann zu diesem Zweck Steuerungs- bzw. Regelungsmittel aufweisen, die dazu ausgebildet sind, die elektrische Versorgung von LED-Leuchtmitteln zu steuern bzw. zu regeln, sodass die Farbe bzw. Farbtemperatur oder Intensität des abgestrahlten Lichts einem oder mehreren Sollwerten, beispielsweise für Teillichtbündel, entspricht. Dieser Sollwert könnte beispielsweise durch Sensormittel zur Verfügung gestellt sein.

Besonders vorteilhaft ist vorgesehen, den Gedanken einer modularen Bauweise weiterhin dadurch zu fördern, dass die Anordnung zur Lichtabgabe eine verbundene Baugruppe bildet, sodass diese beispielsweise eine Halogenlampe ersetzen kann und beispielsweise deren Abmessungen nachbildet, insbesondere kommen hierfür die eingangs beschriebenen Typen von Halogenlampen (bzw. durch deren Sockel gekennzeichnete Lampen, welche die beschriebenen Maße aufweisen) in Frage.

Ein weiterer Aspekt der Erfindung betrifft eine Leuchte mit einer Anordnung zur Lichtabgabe. Insbesondere bei Pendel-, Einbau- bevorzugt Deckenleuchten kann so ein Erscheinungsbild gewahrt werden, welches dem von Leuchten mit Halogenlampen gleichkommt. Jedoch sind auch andere Arten von Leuchten im Rahmen der Erfindung denkbar.

Nachfolgend soll die Erfindung anhand der beiliegenden Zeichnung näher erläutert werden, wobei gleiche Elemente in allen Darstellungen mit den gleichen Bezugszeichen versehen sind. Es zeigen:
Fig. 1 ein Ausführungsbeispiel einer Anordnung zur Lichtabgabe mit einem Reflektor;
Fig. 2 ein Ausführungsbeispiel eines Lichtabgabeelements;
Fig. 3 a-c) Ausführungsbeispiele für die Form eines Lichtaustrittsbereichs;
Fig. 4 die Explosionsdarstellung eines Ausführungsbeispiels einer Kombination aus Reflektor und Lichtabgabeelement; und
Fig. 5 a, b) Ausführungsbeispiele für Leuchten mit einer Anordnung zur Lichtabgabe.

Halogenlampen sind etablierte Leuchtmittel für eine Vielzahl von Anwendungen. Neben ihrer Verwendung im Automobilbereich sind durch die gegenüber konventionellen Glühbirnen gesteigerte Effizienz kompakte Bauformen von Halogenlampen bekannt, die eine ästhetisch ansprechende Gestaltung von Leuchten ermöglicht. Aus Gründen der Energieeffizienz und der Zuverlässigkeit ist jedoch ein Trend in der Beleuchtungsindustrie zur Verwendung von LED-Leuchtmitteln für vielfältige Beleuchtungszwecke erkennbar. Trotz zunehmender Leistungsfähigkeit von LED-Leuchtmitteln unterscheiden sich diese in der Lichtabgabe von Halogenlampen, sodass bestehende Leuchtenkonstruktionen der Lichtabgabe von LED-Leuchtmitteln stark angepasst werden müssen, um ein nahezu identisches Erscheinungsbild zu einer Leuchte mit konventionellen Leuchtmitteln zu erreichen.

Die Erfindung beruht auf dem Bedürfnis diese Anpassung auf einfache Art und Weise zu ermöglichen; insbesondere soll eine modulartige Lösung zum Ersatz einer Halogenlampe angegeben werden.

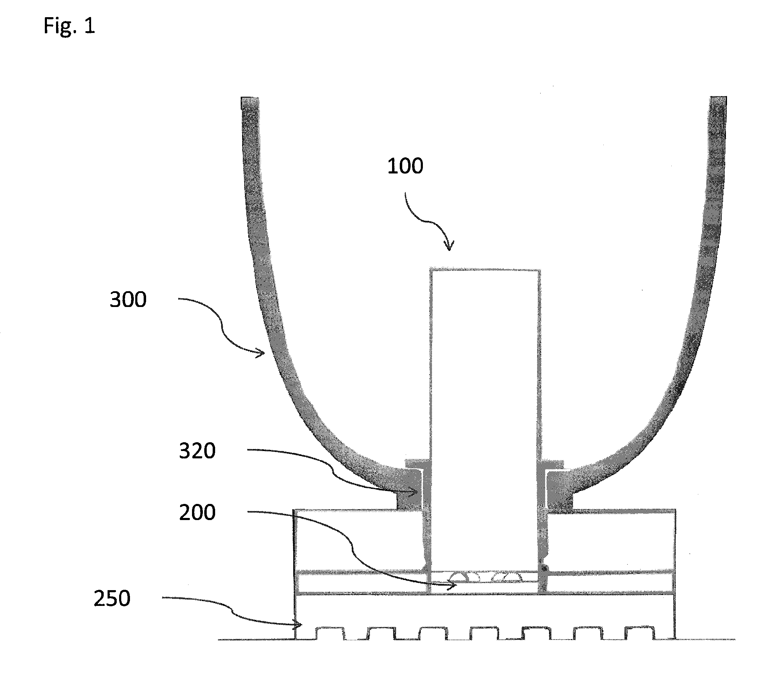

Erfindungsgemäß ist, wie beispielweise in Figur 1 dargestellt, eine Anordnung zur Lichtabgabe mit LED-Leuchtmitteln 200 zur Abgabe von Licht und einem länglichen Lichtabgabeelement 100 vorgesehen. Das Lichtabgabeelement 100 weist an einer Schmalseite einen Lichteintrittsbereich zum Eintritt des Lichts der LED-Leuchtmittel 200 in das Lichtabgabeelement 100 auf. Im gezeigten Ausführungsbeispiel bildet die Längsausdehnung des Lichtabgabeelements 100 insbesondere die Normalenrichtung des in dem Ausführungsbeispiel ebenen Lichteintrittsbereichs. Jedoch ist der Lichteintrittsbereich keinesfalls auf diese Bauform beschränkt.

Beispielsweise kann vorgesehen sein, dass die LED-Leuchtmittel 200 in eine oder mehrere Ausnehmungen des Lichtabgabeelements 100 ragen, die eine optimierte Lichteinstrahlung der LED-Leuchtmittel 200 in das Lichtabgabeelement ermöglichen. Bevorzugt sind die LED-Leuchtmittel 200 so angeordnet, dass deren Licht ausschließlich mit Hilfe des Lichtabgabeelements 100 abgegeben wird.

Darüber hinaus weist das Lichtabgabeelement 100 einen Lichtaustrittsbereich zur Abstrahlung des Lichts der LED-Leuchtmittel 200 auf, der sich über eine dem Lichteintrittsbereich gegenüberliegende Seite des Lichtabgabeelements 100 erstreckt.

Weiterhin kann vorgesehen sein, dass der Lichtaustrittsbereich sich auch auf Bereiche quer zur Längsausdehnung des Lichtabgabeelements erstreckt, wobei bevorzugt ein zusammenhängender Lichtaustrittsbereich gebildet wird.

Das Lichtaustrittselement 100 und insbesondere dessen Lichtaustrittsbereich beschreibt so eine längliche, zapfenartige bzw. stabartige Form, die der Form von kompakten Halogenlampen gleichkommt. Die Lichtabgabe kann dabei einen Raumwinkel von 180 Grad erreichen bzw. übertreffen, sodass die räumliche Abstrahlcharakteristik der Anordnung zur Lichtabgabe an gängige einseitig gesockelte Halogenlampen angenähert ist.

Im dargestellten Ausführungsbeispiel sind die LED-Leuchtmittel 200 durch ein LED-Cluster gebildet, welches auf einem gemeinsamen Trägerelement 210 angeordnet ist, das insbesondere auch zum elektrischen Anschluss der LEDs sowie beispielsweise auch zur Wärmeabfuhr der LED-Leuchtmittel 200 ausgebildet sein kann. Die LED-Leuchtmittel 200 sind dabei beabstandet zu dem Lichtabgabeelement 100 angeordnet, wobei jede LED eine Primäroptik aufweist, die direkt mit der entsprechenden LED verbunden ist. Aufgrund der hohen Verfügbarkeit dieser LEDs ermöglicht dies eine kostengünstige Lösung; in gleicher Weise könnte jedoch auch die direkte Kombination mehrerer LEDs mit dem Lichtabgabeelement 100 vorgesehen sein, beispielsweise auch mit Hilfe von ungehäusten LEDs, um eine optimierte Lichtabgabe zu realisieren.

Gemäß dem Ausführungsbeispiel ist eine Vielzahl von LEDs, insbesondere Hochleistungs-LEDs, vorgesehen, deren Anzahl und Anordnung durch einen Kompromiss zwischen Platzbedarf und Wärmeabfuhr bestimmt wird. Besonders vorteilhaft ist, dass durch entsprechende Gestaltung des Lichteintrittsbereichs die Anzahl unabhängig von der Form des Lichtaustrittsbereichs gewählt werden kann. Das Ausführungsbeispiel zeigt ein LED-Cluster mit sieben LEDs, die in Kombination eine Leistungsaufnahme zwischen 10 und 25 Watt aufweisen und so einen optimalen Kompromiss zwischen Flächenbedarf bzw. Lichtleistung der LEDs und der Fläche des Lichtaustrittsbereichs realisieren.

Das Lichtabgabeelement 100 und insbesondere dessen Lichtaustrittsbereich ist so bemessen, dass es durch einen Zylinder mit einem Durchmesser zwischen 4 bis 40 mm, bevorzugt bis 30 mm, besonders bevorzugt bis 20mm, und einer Länge zwischen 8 bis 80 mm, bevorzugt bis 60 mm, besonders bevorzugt bis 50 mm eingeschlossen werden kann. Somit kann die Einhaltung von Beschränkungen der Betriebstemperatur der LED-Leuchtmittel 200 erreicht werden und ein optimales Verhältnis zwischen der Fläche des Lichtaustrittsbereichs bzw. Leuchtdichte der LEDs erreicht werden, wobei gleichzeitig die Abmessungen einer kompakten Halogenlampe eingehalten werden können.

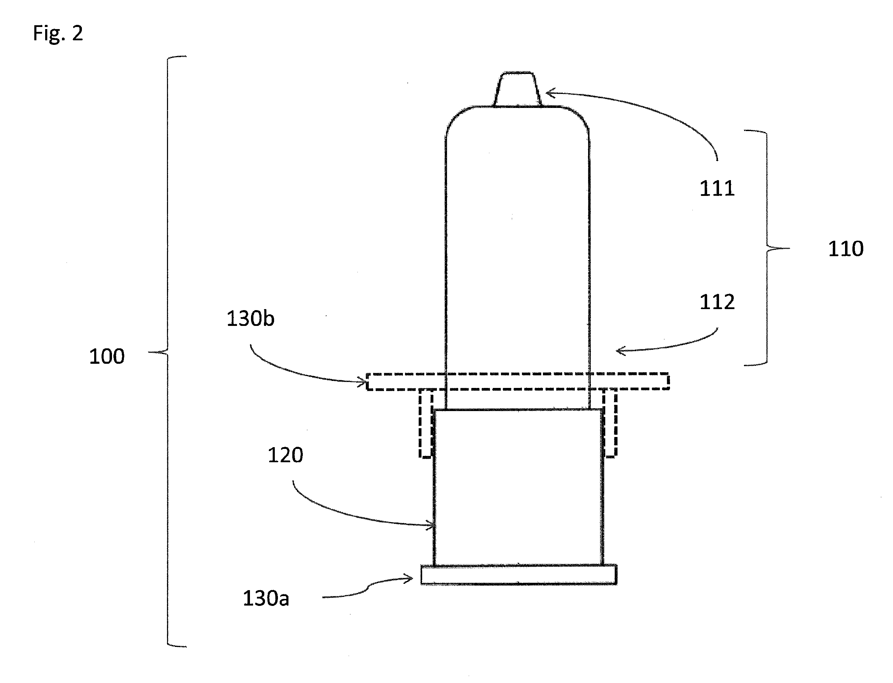

Figur 2 beschreibt ein diesen Randbedingungen genügendes Lichtabgabeelement 100 näher.

Der Lichtaustrittsbereich des Lichtabgabeelements 100 weist erste und zweite Teilbereiche 110 bzw. 120 auf. Der erste Teilbereich 110 ist in diesem Ausführungsbeispiel als Diffusor ausgebildet, und weist eine Aufrauhung bzw. eine bevorzugt unregelmäßige Strukturierung der Oberfläche auf, um eine Lichtstreuung bzw. Lichtbeugung zu erreichen. Mit Hilfe dieser Maßnahme kann die gewöhnlich auf einen engen Winkelbereich beschränkte Lichtabstrahlung der LED-Leuchtmittel 200 zu einer Lichtabstrahlung einer einseitig gesockelten Halogenlampe umgeformt werden.

Der erste Teilbereich 110 weist in diesem Ausführungsbeispiel einen Durchmesser von 12 mm auf und einen ersten zylinderförmigen Abschnitt der eine Länge von 25 mm erreicht und dessen Deckfläche abgerundet ist, sodass im Übergangsbereich zwischen Deckfläche und Mantelfläche des zylinderförmigen Abschnitts eine kontinuierliche Lichtabgabe realisiert werden kann. Darüber hinaus weist der erste Teilbereich 110, auf der Deckfläche des zylinderförmigen zweiten Abschnitts 112 angeordnet, einen ersten Abschnitt 111 auf, insbesondere einen kegelstumpfförmigen Zapfen, der beispielsweise eine Linsenwirkung realisieren kann und gleichzeitig die Gestaltung des Lichtaustrittsbereichs an eine Halogenlampe annähert. In Kombination ist so ein erster Teilbereich 110 des Lichtaustrittsbereichs gebildet, der die Abmessungen einer gängigen Halogenlampe aufweist und bereits erwähnte optimale Bedingungen für die Fläche eines Lichtaustrittsbereichs realisieren kann.

Bevorzugt weisen die ersten und zweiten Abschnitte 111, 112 des Lichtaustrittsbereichs eine zueinander unterschiedliche Lichtabstrahlcharakteristik auf, beispielsweise könnte der erste Abschnitt 111 eine gerichtete Lichtabstrahlung realisieren, und die Wirkung einer Linse aufweisen.

Darüber hinaus weist das Lichtabgabeelement 100 gemäß dem Ausführungsbeispiel der Figur 2, insbesondere dessen Lichtaustrittsbereich, einen zweiten Teilbereich 120 auf, der auch dazu ausgebildet sein kann, einen zweiten Teil des Lichts der LED-Leuchtmittel 200 abzustrahlen.

Die Lichtabstrahlcharakteristik ist dabei bevorzugt unterschiedlich zum ersten Teilbereich 110, sodass über die Möglichkeiten eine Halogenlampe hinaus weitergehende Möglichkeiten zur Lichtabgabe erreicht werden.

Im Ausführungsbeispiel übertrifft der ebenfalls zylinderähnlich ausgebildete zweite Teilbereich 120 des Lichtaustrittsbereichs im Durchmesser den ersten Teilbereich und weist in diesem Fall einen Durchmesser von 14 mm auf.

Bevorzugt weist die Anordnung zur Lichtabgabe einen im Lichtweg dem Lichtabgabeelement 100 nachfolgenden Reflektor 300 zur Abstrahlung des von den LED-Leuchtmitteln 200 abgestrahlten Lichts auf.

Im Ausführungsbeispiel von Figur 1 ist dieser Reflektor 300 aus Glas gefertigt und transparent zumindest für spektrale Anteile des von den LED-Leuchtmitteln 200 abgestrahlten Lichts. Der Reflektor 300 ist kuppelförmig ausgeführt, sodass sich ein durch den Reflektor 300 umschriebener bzw. umschlossener Innenraum ergibt, der eine Lichtaustrittsöffnung 350 aufweist.

Der Lichtaustrittsbereich des Lichtabgabeelements 100 ist dabei so ausgestaltet, dass ein erster Teil des Lichts in dem ersten Teilbereich 110 so abgegeben wird, dass der erste Teil von dem Reflektor 300 reflektierend abgestrahlt wird. Beispielsweise kann dies über die Mantelfläche eines zylinderförmigen Lichtaustrittsbereichs realisiert sein. Im Fall des transparenten Reflektors bedeutet dies, dass der erste Teil des Lichts gegenüber dem Reflektor 300 einen Einfallswinkel aufweist, der zur Totalreflektion am dünneren Medium führt.

Insbesondere kann die Materialstärke des Reflektors 300 so gewählt werden, dass dieser Lichtleitereigenschaften aufweist.

Weiterhin kann der zweite Teilbereich 120 so ausgebildet sein, dass sich dessen Lichtabstrahlcharakteristik von der des ersten Teilbereichs 110 des Lichtaustrittsbereichs unterscheidet und beispielsweise eine gerichtete Abstrahlcharakteristik aufweist.

Im Fall eines zur Lichtleitung ausgebildeten Reflektors 300 könnte der zweite Teilbereich 120 beispielsweise dazu ausgebildet sein, Licht in den Reflektor 300 zur Licht Lichtleitung einzukoppeln.

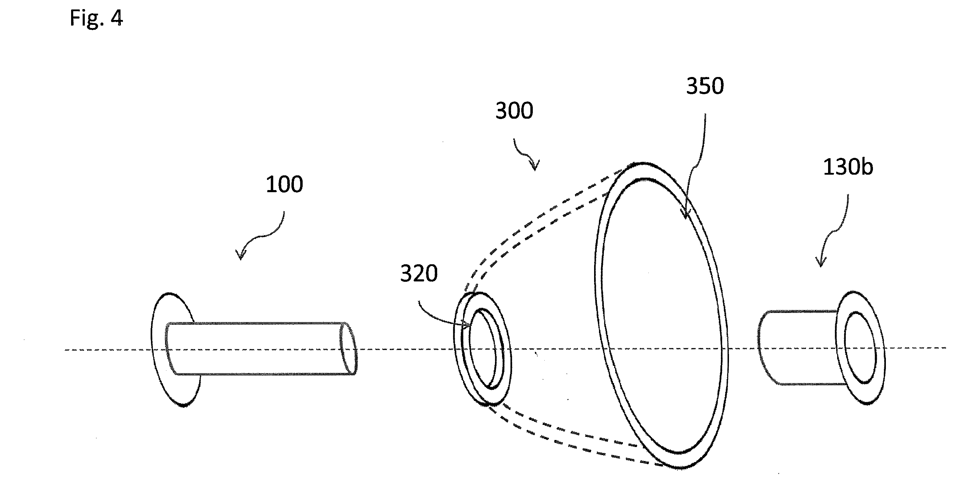

Besonders förderlich ist, wenn das Lichtabgabeelement 100, wie besonders aus den Figuren 1 und 4 deutlich wird, ein Durchführungsloch 320 in dem Reflektor 300 durchragt, sodass Teilbereiche des Lichtabgabeelements 100 außerhalb des durch den Reflektor 300 umschriebenen Innenraumes und andere Teilbereiche innerhalb angeordnet sind. Insbesondere ist vorgesehen den o.a. ersten Teilbereich 110 des Lichtaustrittsbereichs bzw. Lichtabgabeelements 100 innerhalb des Innenraumes anzuordnen.

Insbesondere kann der Reflektor 300 zur Führung des Lichtabgabeeelements 100 ausgebildet sein und im Bereich des Durchführungslochs 320 Führungsmittel 322 aufweisen, beispielsweise flanschförmige Verstärkungen die zumindest teilweise mit der Oberflächenform des Lichtabgabelements 100 korrespondieren. Bevorzugt könnte der zweite Teilbereich 120 des Lichtabgabeelements 100 bzw. des Lichtaustrittsbereichs ebenfalls als korrespondierendes Führungsmittel für den Reflektor 300 ausgebildet sein. Die Längsausdehnung des Lichtabgabeelements 100 ist dabei in Übereinstimmung mit einer vorzugsweise zentralen Symmetrieachse S des Reflektors 300 orientiert bzw. zu dieser parallel angeordnet. Insbesondere kann das Durchführungsloch 320 der Lichtaustrittsöffnung 350 gegenüberliegen bzw. in einer zur Lichtaustrittsöffnung 350 parallelen Ebene angeordnet sein.

Besonders vorteilhaft sind die LED-Leuchtmittel 200 außerhalb des durch den Reflektor 300 umschriebenen Innenraumes angeordnet. Insbesondere kann der Lichtabstrahlbereich des Reflektors 300 durch die Lichtaustrittsöffnung 350 festgelegt sein, bevorzugt wenn der Reflektor 300 Teilbereiche aufweist, die für spektrale Anteile des Lichts der LED-Leuchtmittel 200 reflektierend ausgebildet sind. Im beschriebenen Ausführungsbeispiel könnte dies beispielsweise besonders leicht durch eine Beschichtung bzw. Bedampfung des Glases mit einem Metall erreicht werden. In gleicher Weise ist auch denkbar, dass die gesamte Oberfläche des Reflektors 300 reflektierend ausgebildet ist.

Die Anordnung der LED-Leuchtmittel 200 außerhalb des Lichtabstrahlbereichs bzw. außerhalb des von dem Reflektor 300 umschriebenen Innenraumes bringt nun den Vorteil mit sich, dass der Platzbedarf der LED-Leuchtmittel 200 - oder auch deren Betriebsmittel bzw. entsprechender Mittel zur Kühlung - die Lichtabgabe der Anordnung zur Lichtabgabe, insbesondere des Reflektors 300, und des Lichtaustrittbereichs nicht beeinflusst. Der Platzbedarf des Lichtabgabeelements 100 innerhalb des von dem Reflektor umschriebenen Innenraumes kann somit unbeeinflusst von der Anzahl einzelner LED-Leuchtmittel 200 gewählt werden, sodass die Leuchtdichte und der Platzbedarf, bzw. die Form des Lichtaustrittsbereichs innerhalb des umschlossenen Innenraumes in Übereinstimmung mit einer Halogenlampe ausgebildet sein können.

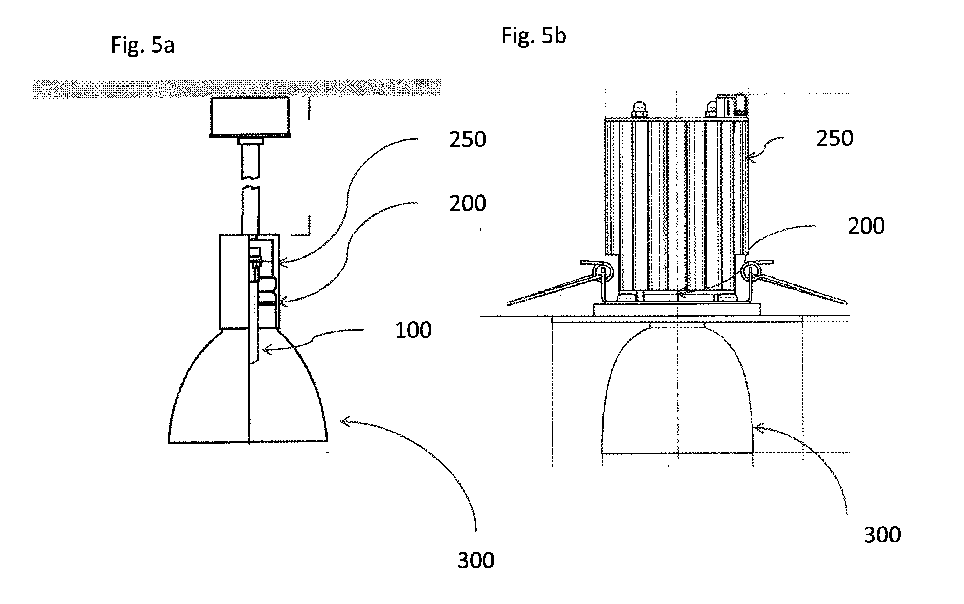

Der Wirkungsgrad der LED-Leuchtmittel 200 bzw. deren Lichtdichte kann insbesondere durch eine Begrenzung der Betriebstemperatur der LED-Leuchtmittel gefördert werden. Wie insbesondere aus den Figuren 1 und 5b ersichtlich ist, können die LED-Leuchtmittel 200 mit einem Kühlkörper 250 zum Wärmemaustausch bzw. zur Abfuhr der Wärme der LED-Leuchtmittel 200 verbunden sein. Bevorzugt ist der Kühlkörper 250 ebenfalls außerhalb des Lichtabstrahlbereichs der LED-Leuchtmittel 200 angeordnet und besonders bevorzugt mit einem Trägerelement der LED-Leuchtmittel 200 bzw. direkt mit den LED-Leuchtmitteln 200 verbunden.

Im dargestellten Ausführungsbeispiel ist ein ringförmiger Kühlkörper 250 mit radial nach außen weisenden Kühlrippen vorgesehen, der direkt mit einer Trägerplatine für die LED-Leuchtmittel 200 bzw. das dargestellte LED-Cluster verbunden ist. Der Kühlkörper 250 weist dabei Anschlussmittel zum elektrischen Anschluss der LED-Leuchtmittel 200 auf. Besonders vorteilhaft ist in diesem Fall vorgesehen, dass der Kühlkörper 250 eine Führung für die Anschlussmittel bzw. die Leitungen zum elektrischen Anschluss der LED-Leuchtmittel 200 aufweist. Neben einer kompakten Bauweise kann so insbesondere auch ein zusätzlicher zweiter Weg zur Wärmeabfuhr bereitgestellt werden, der beispielsweise über die elektrischen Anschlussleitungen gebildet ist.

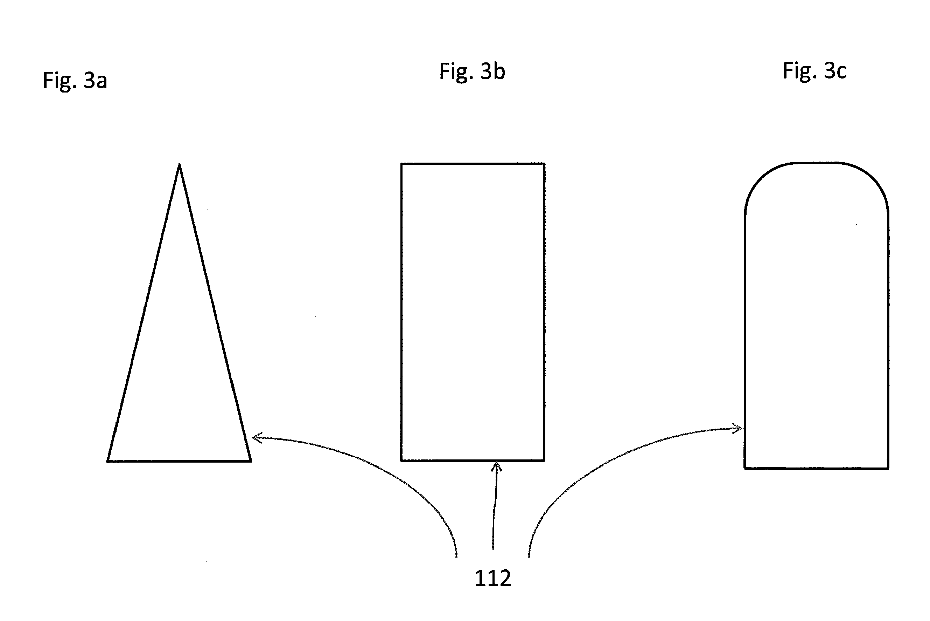

Figuren 2 und 3a)-c) zeigen vorteilhafte Weiterbildungen des Lichtabgabeelements 100, bzw. dessen Lichtaustrittsbereichs. Wie vorbeschrieben angedeutet, kann der Lichtaustrittsbereich erste und zweite Teilbereiche 110 bzw. 120 aufweisen. Im dargestellten Ausführungsbeispiel ragt der erste Teilbereich 110 in den von dem Reflektor 300 umschriebenen Raum, und kann beispielsweise die in den Figuren 3a)-c) angedeutete Form aufweisen. Jedoch ist die Erfindung in keinster Weise auf die dargestellten Formen beschränkt.

Bei einer regelmäßigen Anordnung der LED-Leuchtmittel 200 gegenüber dem Lichteintrittsbereich des Lichtabgabeelements 100 kann auf einfache Art und Weise der Lichteintrittsbereich mit einer nahezu homogenen Leuchtdichte beleuchtet werden. Ohne zusätzliche Maßnahmen kann die in Figur 3a) dargestellt Dreiecksform des ersten Teilbereichs 110 des Lichtabgabeelements 100 kann homogen in den Lichteintrittsbereich eingestrahltes Licht der LED-Leuchtmittel 200 über seinen gesamten Lichtaustrittsbereich abstrahlen, beispielsweis kann der Lichtaustrittsbereich dann die Form einer Pyramide oder eines Kegels aufweisen.

Die weiterhin dargestellten Formen der Figuren 3b) und 3c) bieten hingegen andere Vorteile. Das Lichtabgabeelement 100 gemäß Figur 3b) weist einen zylindrischen ersten Teilbereich 110 des Lichtaustrittsbereichs 100 auf, sodass die Deckfläche eine weitgehende homogene Lichtabgabe ermöglicht, während die Lichtabgabe über die Mantelfläche mit Hilfe von zusätzlichen Maßnahmen verbessert werden kann.

Beispielsweise kann das Lichtabgabeelement 100 als Lichtleiter ausgebildet sein, und Auskoppelstrukturen zur Lichtabgabe aus dem Lichtabgabeelement 100 aufweisen. Im Falle des zylindrischen Lichtabgabeelements der Figur 3b) könnten diese beispielsweise im Bereich der Mantelfläche angeordnet sein. Darüber hinaus könnte jedoch auch eine inhomogene Lichteinstrahlung in den Lichteinstrahlbereich vorgesehen sein, sodass die LED-Leuchtmittel so gegenüber der Mantelfläche verkippt angeordnet sind, dass die Mantelfläche homogen beleuchtet wird.

In ähnlicher Weise könnte der Lichteintrittsbereich eine entsprechende Beugung des Lichts der LED-Leuchtmittel bedingen, sodass der Mantelbereich des Lichtabgabeelements 100 bzw. der Lichtaustrittsbereichs homogen beleuchtet wird. Beispielsweise kann der Lichteintrittsbereich dazu eine konische bzw. kegelstumpfartige oder pyramidale Vertiefung aufweisen.

Figur 3c) zeigt eine weitere Optimierung des Lichtaustrittsbereichs des Lichtabgabeelements 100. Zur Aufweitung der Lichtabgabe kann beispielsweise vorgesehen sein, dass der Lichtaustrittsbereich gerundete Formen aufweist, die eine Linsenwirkung bedingen, und so zur Umformung der Lichtabgabe ausgebildet sind. In Figur 3c) ist dies beispielsweise im Übergangsbereich zwischen einer Deckfläche und einer Mantelfläche eines zylindrischen Lichtaustrittsbereichs realisiert.

Hervorzuheben ist in jedem Fall, dass die Ausgestaltung des Lichtaustrittsbereichs keinesfalls auf die dargestellten Ausführungsbeispiele beschränkt ist, sondern eine Kombination der dargestellten Formen oder eine Anpassung an eine spezielle Notwendigkeit der Lichtabgabe im Rahmen des Erfindungsgedankens liegt.

Besonders vorteilhaft ist vorgesehen, wie beispielsweise aus den Figuren 1, 2 und 4 auch in Teilaspekten ersichtlich, dass die Anordnung zur Lichtabgabe eine zusammenhängende, vorzugsweise geschlossene Baugruppe bildet. Somit ergibt sich zunächst eine festgelegte Zuordnung der LED-Leuchtmittel 200 gegenüber dem Lichtabgabeelement 100, sodass die Anordnung zur Lichtabgabe eine festgelegte Lichtabstrahlung aufweist, die leicht in der Konstruktion einer Leuchte berücksichtigbar ist und insbesondere die modulare Integration der Anordnung zur Lichtabgabe fördert.

Zusätzlich ergibt sich jedoch ein weiterer Vorteil darin, dass das Lichtabgabeelement 100 bzw. der Reflektor 300 gleichzeitig eine Schutzwirkung für die LED-Leuchtmittel 200 aufweisen. Im Gegensatz zur filigranen Konstruktion einer Halogenlampe, kann beispielsweise das Lichtabgabeelement massiv gefertigt sein, und den direkten Zugang zu den LED-Leuchtmitteln 200 verhindern, sodass die Leuchtmittel geschützt angebracht sind.

Bevorzugt weist das Lichtabgabeelement 100 Befestigungsmittel 130a bzw. 130b zur Verbindung des Lichtabgabeelements 100 mit dem Reflektor 300 auf. Im dargestellten Ausführungsbeispiel der Figur 2, weist das Lichtabgabeelement 100 einen flanschartigen Fortsatz 130a bzw. 130b auf, der die Dimension des Durchführungslochs 320 übertrifft, und so ein Widerlager gegenüber dem Reflektor bildet. Insbesondere können die Befestigungsmittel 130a bzw. 130b beweglich gegenüber dem Lichtabgabeelement 100 ausgebildet sein, sodass eine genaue Einstellung der Position des Lichtabgabeelements 100 gegenüber dem Reflektor 300 ermöglicht ist.

Wie ebenfalls aus den Ausführungsbeispielen der Figuren 1, 2 und 4 hervorgeht, kann das Lichtabgabeelement 100 dazu ausgebildet sein, das Durchführungsloch 320 des Reflektors 300 vollständig zu verschließen. Insbesondere kann dies mit Hilfe der Befestigungsmittel 130a bzw. 130b realisiert sein.

Besonders vorteilhaft ist die Verbindung des Reflektors 300 mit dem Lichtabgabeelement 100 reversibel lösbar, sodass ein einfacher Zugang zu den LED-Leuchtmitteln 200 erreicht wird. Beispielsweise könnten die Befestigungsmittel 130a,b als Rastmittel ausgebildet sein, bevorzugt in Form eines Bajonettverschlusses, der durch eine einfache Drehbewegung reversibel verriegel- bzw. lösbar ist. Dazu könnte das Lichtabgabeelement 100 elastisch gegenüber den LED-Leuchtmitteln 200 gelagert sein, oder das Lichtabgabeelement 100 könnte elastische Bereiche als Befestigungs- bzw. Rastmittel aufweisen.

Weiterhin könnten die Befestigungsmittel 130a bzw. 130b dazu ausgebildet sein, mit einem zweiten Teilbereich 120 der Lichtabgabefläche zu korrespondieren und eine Lichtabstrahlung bzw. Auskopplung aus dem zweiten Teilbereich 120 zu ermöglichen. Beispielsweise könnte im Fall eines wenigstens teilweise transparenten Reflektors 300, der zur Lichtleitung ausgebildet sein kann, eine Abstrahlung des Lichts aus dem zweiten Teilbereich 120 erfolgen und zur Lichtleitung in den Reflektor 300 bevorzugt im Bereich des Durchführungslochs 320 eingekoppelt werden.

Besonders vorteilhaft kann weiterhin vorgesehen sein, dass die LED-Leuchtmittel eine Vielzahl von LEDs umfassen, wobei wenigstens zwei der Vielzahl von LEDs ein zueinander unterschiedliches Licht abgeben, welches sich insbesondere in der Farbe, bzw. Farbtemperatur oder auch der Intensität über übliche Fertigungstoleranzen hinaus unterscheidet. Somit könnte beispielsweise dem zweiten Teilbereich 120 insbesondere Licht zugeführt werden, das gegenüber der Lichtabstrahlung des ersten Teilbereichs 110 eine unterschiedliche Farbe bzw. Farbtemperatur aufweist.

Weiterhin kann vorgesehen sein, die LED-Leuchtmittel 200 mit Steuerungsmitteln zu verbinden, die ein Steuerung bzw. Regelung der Lichtabgabe in Bezug auf die Farbe, Farbtemperatur oder Intensität erlauben. Beispielsweise könnte ein veränderbarer Sollwert für alle diese Parameter bestimmbar sein und die Steuerungsmittel dazu ausgebildet sein, die Lichtabgabe zur Einhaltung eines Sollwerts zu regeln bzw. zu steuern, sodass über die Möglichkeiten einer Halogenlampe hinaus auch vielfältige zusätzliche Veränderungen der Lichtabgabe denkbar sind.

Ein weiterer Aspekt der Erfindung betrifft eine Leuchte mit einer Anordnung zur Lichtabgabe gemäß der Erfindung. Die Ausführungsbeispiele der Figuren 5a) und 5b) zeigen eine Pendel- bzw. eine Einbauleuchte, die eine Anordnung zur Lichtabgabe gemäß der Erfindung aufweisen. Beide Leuchten realisieren die Lichtabgabe mittels eines zentralen Reflektors 300, der mit einem Lichtabgabeelement 100 kombiniert ist. Die Pendelleuchte gemäß Figur 5a) weist zur Abdeckung der Anordnung zur Lichtabgabe eine Gehäuse auf, welches gleichzeitig zur Wärmeabfuhr ausgebildet ist und als Kühlkörper 250 für die LED-Leuchtmittel 200 dient. Im Gegensatz dazu ist der Kühlkörper 250 der Einbauleuchte der Figur 5b) so angeordnet, dass er durch eine Einbauöffnung eines Leuchtenträgers hindurchführbar ist und somit keine Abdeckung aufweisen muss. Besonders hervorzuheben ist, dass die Anordnung zur Lichtabgabe als zusammenhängen Baugruppe gestaltet, bereits eine Einbauleuchte bilden kann, die beispielsweise lediglich um Befestigungsmittel zur Verbindung der Leuchte mit einem Leuchtenträger ergänzt sein kann.

Die Pendelleuchte gemäß dem Ausführungsbeispiel der Figur 5a) sieht vorteilhaft vor, dass die Befestigungsmittel die Betriebs- bzw. Steuerungsmittel der Anordnung zur Lichtabgabe, insbesondere der LED-Leuchtmittel 200 aufnehmen. Dazu ist ein weiteres Gehäuse vorgesehen, das einen Teil der Befestigungsmittel zur Verbindung mit einem Leuchtenträger bildet.

Hervorzuheben ist, dass die Erfindung nicht auf die dargestellten Pendel- bzw. Einbauleuchten beschränkt ist, sondern ein modularer Austausch von Halogenlampen auch bei einer Vielzahl von abweichenden Leuchte vorgesehen sein kann.

Letztendlich wird durch die Erfindung eine Anordnung zur Lichtabgabe bzw. eine Leuchte geschaffen, die der Form oder auch der Lichtabstrahlung einer Halogenlampe bzw. einer entsprechenden Leuchte gleichkommt und darüber hinaus flexibel steuer-und regelbare LED-Leuchtmittel 200 zur Lichtabgabe vorsieht, sodass damit vielfältige Vorteile verbunden sind. Insbesondere resultiert mit Hilfe der Erfindung ein modulares Konzept, welches die Konstruktion einsprechender LED-Leuchten durch Nutzung von Erfahrungswerten für Halogenlampen wesentlich vereinfacht.

Abschließend ist besonders drauf hinzuweisen, dass die Kombination von Merkmalen verschiedener Ausführungsbeispiele oder in Figuren offenbarter Merkmale erfindungsgemäß eingeschlossen ist.

## Patentansprüche

1. Anordnung zur Lichtabgabe
• mit LED-Leuchtmitteln (200) zur Abgabe von Licht,
• und einem länglichen Lichtabgabeelement (100),
**dadurch gekennzeichnet,**
**dass** das Lichtabgabeelement (100) an einer Schmalseite einen Lichteintrittsbereich zum Eintritt des Lichts der LED-Leuchtmittel (200), bevorzugt einer Vielzahl von LEDs, in das Lichtabgabeelement (100) aufweist und
einen Lichtaustrittsbereich zur Abstrahlung des Lichts der LED-Leuchtmittel (200),
der sich über eine dem Lichteintrittsbereich gegenüberliegende Seite des Lichtabgabeelements erstreckt.

2. Anordnung zur Lichtabgabe nach Anspruch 1,
**dadurch gekennzeichnet, dass** der Lichtaustrittsbereich die Form eines Zylinders, Kegels, Kegelstumpfs, Pyramide bzw. eines länglichen Elements mit polygoner Basisfläche oder einer beliebigen Kombination der Formen aufweist.

3. Anordnung zur Lichtabgabe nach Anspruch 2 ,
**dadurch gekennzeichnet,**
**dass** der Lichtaustrittsbereich einen ersten im Wesentlichen zylinderförmigen Abschnitt (112) aufweist, wobei sich auf der Deckfläche des Zylinders ein kegelförmiger bzw. kegelstumpfförmiger Abschnitt (111) anschießt.

4. Anordnung zur Lichtabgabe nach einem der vorhergehenden Ansprüche ,
**dadurch gekennzeichnet,**
**dass** die LED-Leuchtmittel (200) beabstandet von dem Lichteintrittsbereich angeordnet sind und der Lichtaustrittsbereich sich bevorzugt auf Bereiche quer zur Längsausdehnung des Lichtabgabeelements (100) erstreckt.

5. Anordnung zur Lichtabgabe nach einem der vorhergehenden Ansprüche,
**dadurch gekennzeichnet,**
**dass** die Anordnung einen im Lichtweg dem Lichtabgabeelement (100) nachfolgenden Reflektor (300) zur Abstrahlung des von den LED-Leuchtmitteln (200) abgestrahlten Lichts aufweist.

6. Anordnung zur Lichtabgabe nach Anspruch 5
**dadurch gekennzeichnet,**
**dass** der Reflektor (300) ein Lichtleiter ist, der dazu ausgebildet ist,
das Licht der LED-Leuchtmittel (200) zu leiten und im Bereich einer Lichtabgabefläche aus dem Reflektor auszukoppeln,
sowie darüberhinaus das Licht der LED-Leuchtmittel (200) reflektierend abzustrahlen.

7. Anordnung zur Lichtabgabe mit
LED-Leuchtmitteln (200),
einem Reflektor (300)
und einem Lichtabgabeelement (100)
**dadurch gekennzeichnet,**
**dass** der Reflektor (300) kuppelförmig ist, und
eine Lichtaustrittsöffnung (350)
sowie eine Durchführungsöffnung (320) für das Lichtabgabeelement (100) aufweist.

8. Anordnung zur Lichtabgabe nach einem der vorhergehenden Ansprüche 5 bis 7,
**dadurch gekennzeichnet,**
**dass** die LED-Leuchtmittel (200) außerhalb eines Lichtabstrahlbereichs des Reflektors (300) angeordnet sind.

9. Anordnung zur Lichtabgabe nach einem der vorhergehenden Ansprüche 5 bis 8,
**dadurch gekennzeichnet,**
**dass** das Lichtabgabeelement (100) Befestigungsmittel (130a, 130b) zur Verbindung mit dem Reflektor (300) aufweist.

10. Anordnung zur Lichtabgabe nach einem der vorhergehenden Ansprüche 5 bis 9,
**dadurch gekennzeichnet,**
**dass** das Lichtabgabeelement (100) ein Durchführungsloch (320) des Reflektors (300) vollständig verschließt.

11. Anordnung zur Lichtabgabe nach einem der vorhergehenden Ansprüche 5 bis 10,
**dadurch gekennzeichnet,**
**dass** der Reflektor (300) Teilbereiche aus einem für spektrale Anteile des Lichts der LED-Leuchtmittel (200) transparenten Material aufweist.

12. Anordnung zur Lichtabgabe nach einem der vorhergehenden Ansprüche 5 bis 11,
**dadurch gekennzeichnet,**
**dass** der Reflektor (300) Teilbereiche aufweist, die für spektrale Anteile des Lichts der LED-Leuchtmittel (200) reflektierend ausgebildet sind.

13. Anordnung zur Lichtabgabe nach einem der vorhergehenden Ansprüche,
**dadurch gekennzeichnet,**
**dass** die Anordnung einen Kühlkörper (250) aufweist, der mit den LED-Leuchtmitteln (200) zumindest mittelbar zur Wärmeabfuhr verbunden ist, wobei der Kühlkörper (250) bevorzugt Anschlussmittel zum elektrischen Anschluss der LED-Leuchtmittel (200) aufweist.

14. Anordnung zur Lichtabgabe nach einem der vorhergehenden Ansprüche,
**dadurch gekennzeichnet,**
**dass** die LED-Leuchtmittel (200) eine Vielzahl von LEDs umfassen, wobei wenigstens zwei LEDs der Vielzahl von LEDs ein zueinander unterschiedliches Licht abgeben, welches sich insbesondere in der Farbe, Farbtemperatur sowie auch der Intensität unterscheidet.

15. Anordnung zur Lichtabgabe nach einem der vorhergehenden Ansprüche,
**dadurch gekennzeichnet,**
**dass** die Anordnung zur Lichtabgabe eine verbundene Baugruppe bildet.

16. Leuchte mit einer Anordnung zur Lichtabgabe nach einem der vorhergehenden Ansprüche 1 bis 15.
